(19) **Europäisches Patentamt / European Patent Office / Office européen des brevets**

(11) **EP 1 605 601 B1**

(12) ## EUROPEAN PATENT SPECIFICATION

(45) Date of publication and mention
of the grant of the patent:
**12.12.2007  Bulletin 2007/50**

(51) Int Cl.:
***H04B 1/707*** (2006.01)

(21) Application number: **04256371.8**

(22) Date of filing: **15.10.2004**

(54) **Interference eliminating apparatus and method**

Vorrichtung und Verfahren zur Interferenzunterdrückung

Appareil et procédé de rejet d'interférence

(84) Designated Contracting States:
**DE FR GB**

(30) Priority: **09.06.2004  JP 2004170848**

(43) Date of publication of application:
**14.12.2005  Bulletin 2005/50**

(73) Proprietor: **FUJITSU LIMITED
Kawasaki-shi,
Kanagawa 211-8588 (JP)**

(72) Inventors:
• **Dateki, Takashi,
Fujitsu Limited
Kawasaki-shi,
Kanagawa 211-8588 (JP)**

• **Furukawa, Hideto,
Fujitsu Limited
Kawasaki-shi,
Kanagawa 211-8588 (JP)**

(74) Representative: **Hitching, Peter Matthew et al
Haseltine Lake
Lincoln House
300 High Holborn
London WC1V 7JH (GB)**

(56) References cited:
EP-A- 1 085 671          EP-A- 1 304 815
WO-A-03/043239      US-A- 5 325 394
US-A- 6 034 986

**Description**

BACKGROUND OF THE INVENTION

This invention relates to an interference eliminating apparatus and method. More particularly, the invention relates to an interference eliminating apparatus and method that utilize the correlation between a code for spreading a demodulation-target signal (a desired signal) in CDMA and a code (non-orthogonal code), which is not orthogonal to the above-mentioned code, for spreading an elimination-target signal (an undesired signal).

CDMA (Code Division Multiple Access) systems in the field of mobile communications have already been proposed in a variety of research and inventions, and W-CDMA has been put to practical use, as seen in ITM-2000. An example of W-CDMA will now be described. By using codes that are basically orthogonal, a base station transmits signals to a plurality of mobile stations in the downlink synchronously so as to maintain the orthogonality between the base station and each user (each channel). As a result, multiple users or channels are multiplexed. However, a channel referred to as a synchronization channel (SCH) used in order to establish synchronization employs a code that is not orthogonal to other codes. When viewed from another code, such a non-orthogonal code appears as interference noise after despreading. This leads to a decline in quality, such as a decline in the throughput of the system. More specifically, with a W-CDMA scheme, ordinarily there is no interference between different channels because spreading is carried out using channelization codes that are mutually orthogonal. With regard to the synchronization channel SCH, however, channelization codes are not used. Consequently, when viewed from another channel, a synchronization channel SCH appears to be an interference wave at a portion at which the synchronization channel SCH is superimposed.

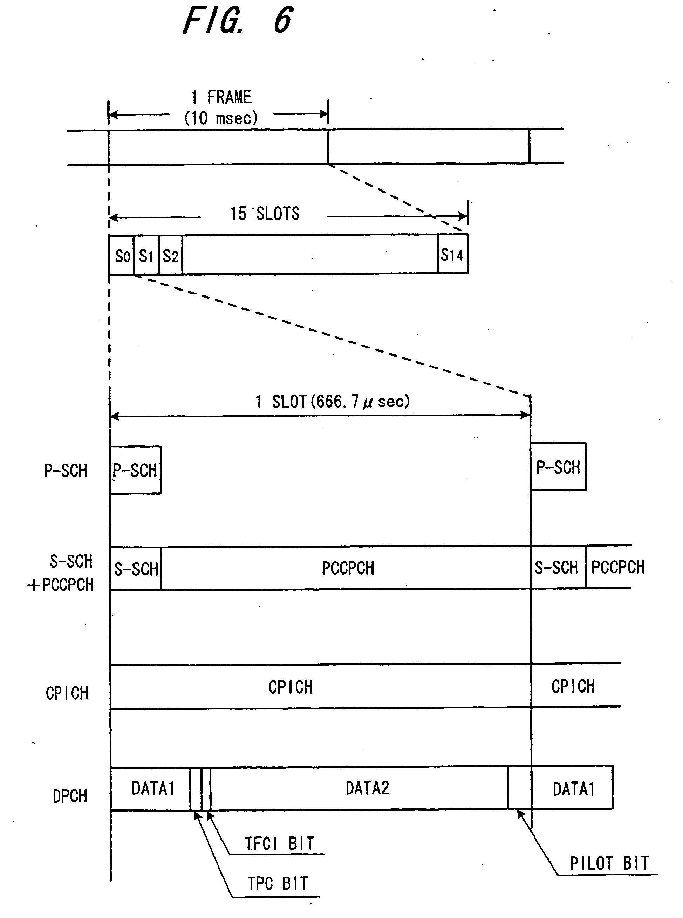

Fig. 6 is a diagram useful in describing the positional relationship among a synchronization channel SCH, common pilot channel CPICH and dedicated physical channel DPCH. One frame has a duration of 10 ms and is composed of 15 slots $S_0$ to $S_{14}$. A primary synchronization channel P-SCH is used to achieve slot synchronization in a channel for a cell search. The primary synchronization channel P-SCH is spread at each base station by a preset primary scramble code PSC of 256-chip length and is situated at the beginning 66.7 $\mu$s of every slot. The PSC is the same for all base stations. A secondary synchronization channel S-SCH is for establishing frame synchronization with respect to the base station and for making the mobile station aware of to which among 64 scramble code groups the base station (cell) belongs. The secondary synchronization channel S-SCH is spread by a secondary scramble code SSC of 256-chip length and is situated at the beginning 66.7 $\mu$s of every slot. A primary common control physical channel PCCPCH is a common channel in the downlink direction and one exists for each base station. It is used to transmit BCH (notification information). The BCH includes information relating to the base station. The common pilot channel CPICH is a common channel in the downlink direction for transmitting a pilot, and one exists for each cell. The CPICH is spread by the base-station code. A mobile terminal MS is capable of identifying the base-station code by calculating the correlation between each of eight scramble codes of the identified group and the common pilot channel CPICH. The dedicated physical channel DPCH is a channel for transmitting data (Data1, Data2) and control information such as TRCI/TPC/PILOT for each individual user.

The foregoing relates to a case where a signal that has been spread by a non-orthogonal code is seen as interference with respect to a desired signal. However, there are also cases where a signal that has been spread by an orthogonal code is seen as interference owing to a delay. That is, in a CDMA direct-sequence system, a plurality of delayed waves having different timings cease being mutually orthogonal. As a consequence, these delayed waves appear as noise when viewed from a desired wave that has been spread by a specific code. This degrades the performance of the system, such as by lowering the throughput thereof, in a manner similar to that of a signal that has been spread by a non-orthogonal code.

In order to improve upon the decline in performance ascribable to the fact that a code is not orthogonal, interference canceling techniques have been the subject of research and some have been proposed. A conventional example of an interference canceling unit will be described.

Fig. 7 illustrates an example of the structure of a transmitter in a hypothetical CDMA system. A signal D0 represents a pilot signal. This transmitted signal is already known to the mobile station. A signal D1 represents a desired signal that is to undergo decoding. Signals from D2 onward represent other control information and undesired signals destined for other mobile stations; these signals are not to be demodulated. A spreader 10a spreads the signal D0 by multiplying it by a spreading code code0 and outputs a spread signal B0. Similarly, spreaders 11a, 12a, ⋯ spread the signals D1, D2, ⋯ by multiplying them by spreading codes code1, code2, respectively, and output spread signals B1, B2, ⋯, respectively. Assume that the spreading code2 uses a pattern that is not orthogonal to the spreading code code1. Multipliers 10b to 12b multiply the spread signals Bi (i = 0, 1, 2, ⋯) by gains Gi conforming to transmission amplitude, thereby adjusting amplitude, and an adder 13 multiplexes the outputs of these multipliers and outputs a transmit baseband signal E. A transmitting unit 14 converts the transmit baseband signal to an analog signal, applies processing such as a frequency conversion and high-frequency amplification to the quadrature-modulated, high-frequency signal and transmits the resultant signal from an antenna 15.

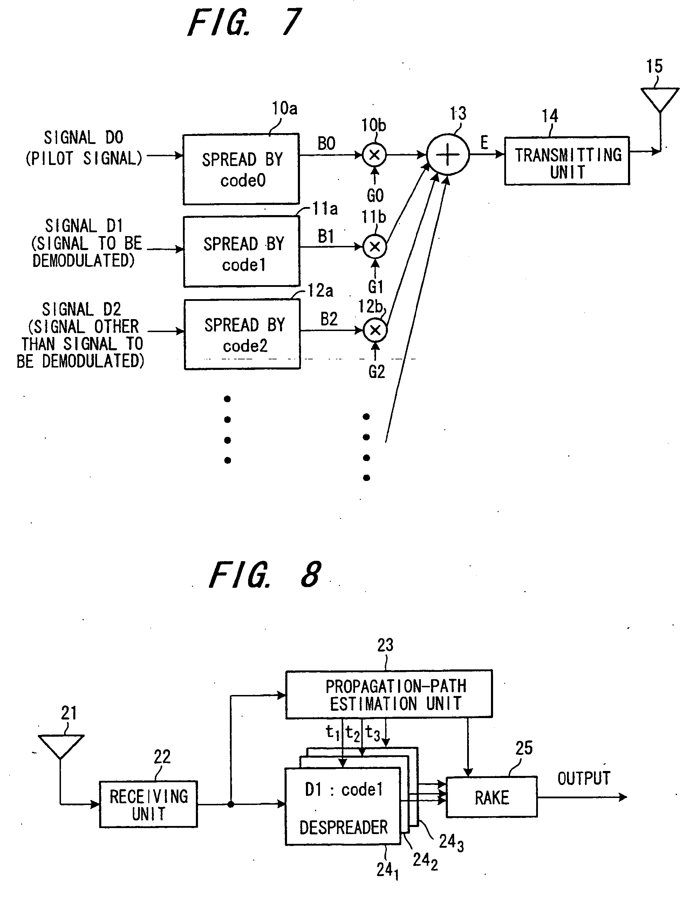

Fig. 8 illustrates an example of the structure of a conventional CDMA receiver that does not possess an interference eliminating apparatus. This is a case where the signal D1 to be demodulated (namely the desired signal) is received.

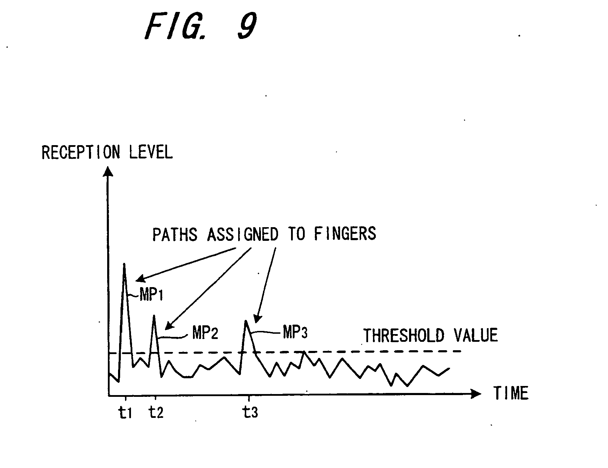

The signal, which has been received by an antenna 21, is applied to a receiving unit 22 where the signal undergoes processing applied to the baseband such as a frequency conversion, quadrature demodulation and A/D conversion. The processed signal is then input to a propagation-path estimation unit 23 and to fingers $24_1$, $24_2$, $24_3$, $\cdots$ corresponding to the paths of a multipath system. The propagation-path estimation unit 23 calculates the correlation between the spreading code of a channel of interest and the receive baseband signal, thereby estimating the number of paths of the multipath system and the receive timings, and estimates (by channel estimation) the phases and amplitudes of delayed waves received at the timings of the respective paths. Fig. 9 illustrates an example of a waveform illustrating the reception level of the receive baseband signal. Here peaks are indicated at the times at which direct waves and delayed waves arrive via multipaths MP1, MP2, MP3. The reception level waveform is obtained by the above-described correlation calculation, and from this the number of paths of the multipath system and receive timings t1, t2, t3 of the direct and delayed waves are estimated. The fingers $24_1$, $24_2$, $24_3$, $\cdots$ perform despreading at the path timings t1, t2, t3 by the code code1 that was used in spreading the signal D1 to be demodulated, after which the fingers delay the despread signals by prescribed time delays, thereby uniformalizing the timings, and input the resultant signals to a RAKE unit 25. The RAKE unit 25 applies weighting to the despread results of respective ones of the multipaths using the channel characteristics of the paths (the estimated values of phase and amplitude of the paths) estimated by the propagation-path estimation unit 23 and then combines the multipaths.

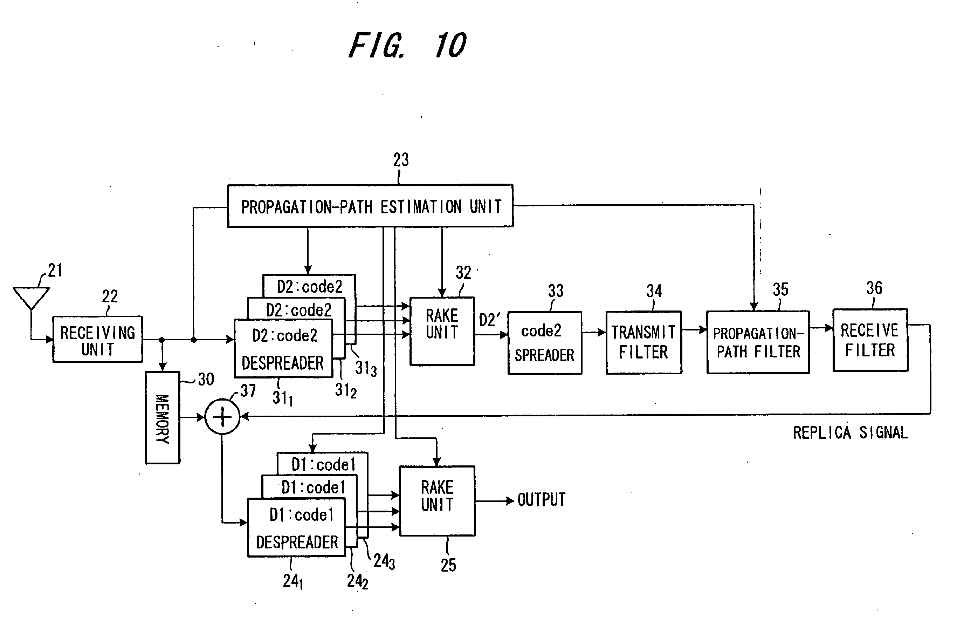

Though Fig. 8 illustrates a case where a CDMA receiver is not equipped with an interference eliminating function, Fig. 10 illustrates a CDMA receiver having an interference eliminating function. Components in Fig. 10 identical with those of Fig. 8 are designated by like reference characters.

The signal received by the antenna 21 undergoes processing applied to the baseband such as a frequency conversion, quadrature demodulation and A/D conversion. The processed signal is then input to the propagation-path estimation unit 23, a memory 30 and fingers $31_1$, 32, $33_3$, $\cdots$ corresponding to the paths of a multipath system.

The memory 30 stores the receive signal until the generation of a replica signal for eliminating interference. The propagation-path estimation unit 23 estimates the number of paths of the multipath system and the receive timings and estimates (by channel estimation) the phases and amplitudes of delayed waves received at the timings of the respective paths. The fingers $31_1$, $31_2$, $31_3$, $\cdots$ perform despreading by multiplying the receive signal at the path timings t1, t2, t3 by the code code2 that was used in spreading the signal (the elimination signal) D2 not to be demodulated, after which the fingers delay the despread signals by prescribed time delays to uniformalize the timings and input the resultant signals to a RAKE unit 32. The latter applies weighting to the despread results of respective ones of the multipaths using the channel characteristics of the paths (estimated values of phase and amplitude of the paths) estimated by the propagation-path estimation unit 23 and then combines the multipaths and outputs a signal (undesired signal) D2' that is not to be demodulated.

Next, in order to generate a replica in the receiving unit of the undesired signal D2, a spreader 33 multiplies the signal D2', which is output from the RAKE unit 32, by the spreading code code2, thereby despreading the signal D2'. A transmit filter 34, propagation path filter 35 and receive filter 36 apply transfer characteristics of the transmitter, propagation path and receiver to the signal that is output from the spreader 33, thereby generating a replica signal. The transfer characteristics of the transmitter and receiver are already known. Channel estimation values that enter from the propagation-path estimation unit 23 are used as the transfer characteristic of the propagation path.

A subtractor 37 reads the receive signal, which has been stored in the memory 30, output of the memory 30 taking processing delay into consideration, and subtracts the replica signal from the receive signal to thereby eliminate the interference component. The fingers $24_1$, $24_2$, $24_3$, $\cdots$ thenceforth multiply the signal, which is output from the subtractor 37, at the path timings t1, t2, t3 by the code code1 that was used in spreading the signal D1 to be demodulated, thereby achieving despreading. These despread signals are then delayed by prescribed delay times to uniformalize the timings, and the signals are input to the RAKE unit 25. The latter applies weighting to the despread results of respective ones of the multiple paths using the channel characteristics of the paths (estimated values of phase and amplitude of the paths) estimated by the propagation-path estimation unit 23, combines the multiple paths and outputs the combined signal.

In the arrangement of Fig. 10, the transmit signal is estimated, after which processing is executed to reproduce, by calculation, the signal component actually transmitted and received via the propagation path. This entails a great deal of additional processing, namely the following:

- processing for holding the receive signal;
- processing for despreading the receive signal by code2 and performing RAKE combining;
- processing for spreading the combined output signal of the RAKE unit by code2;
- transmit filter processing;

- propagation-path filter processing; and
- receive filter processing.

This is a great amount of processing. Though the example cited here is only one example, many conventional interference eliminating techniques adopt baseband replica generation and elimination in a manner similar to this example and therefore involve a very great amount of processing.

In order to eliminate interference by an interference signal generated by spreading an undesired signal by a code (a non-orthogonal code) that is not orthogonal to the spreading code of a desired signal, a first prior-art technique (see the specification of JP2001-217813A) and second prior-art technique (see the specification of JP2001-156749A), which output the desired signal by performing despreading using the spreading code after the undesired signal is removed from the receive signal, have been proposed in addition to the prior art described above.

With the first prior-art technique, the receive timing of the undesired signal (a search code) is sensed and the undesired signal is subtracted from the receive signal at this receiving timing. Further, the receive timing is that of an undesired signal on any path of the multipath system. Further, a cross-correlation value between the spreading code of the desired signal and the non-orthogonal code is calculated and the search code is subtracted from the receive signal using the cross-correlation value.

With the second prior-art technique, a non-orthogonal spreading signal that has been compensated for phase rotation on a radio transmission path is generated, the non-orthogonal spreading signal is subtracted from the receive signal and the result of subtraction is despread to demodulate the data signal.

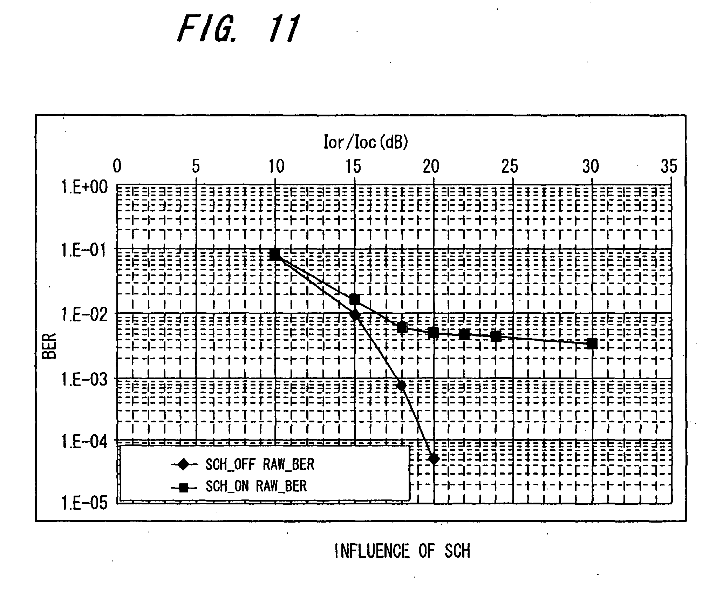

In a CDMA system, a signal that has been despread by a non-orthogonal code constitutes an interference wave and degrades the quality of reception. In W-CDMA, for example, multiple users and multiple channels on the downlink are multiplexed upon being spread using mutually orthogonal codes. If delayed waves are produced owing to the influence of multipath, etc., the delayed waves become interference waves with_respect to other channels and degrade characteristics. Since such interference is mutually orthogonal in a non-multipath environment, users and channels other than the channel to be demodulated are rendered nil by orthogonality and, hence, eliminated. With W-CDMA, however, the synchronization channel SCH for establishing synchronization uses a code that is not orthogonal to other codes and therefore this code constitutes an interference wave even in the aforesaid non-multipath environment. This SCH interference is a major cause of characteristic degradation. This SCH interference is an impediment when it is attempted to realize very high transmission speeds. In enhancement for speeding up a W-CDMA system currently being promoted, the degradation brought about by SCH interference is a factor that cannot be ignored. Fig. 11 illustrates the result of a simulation representing the influence of SCH interference in a W-CDMA system. Here Ioc represents external noise and Ior denotes reception power, namely the power at which a transmit signal from a base station is received at a mobile station. This simulation means that the closer a point is to the right side of the graph, the larger the received base-station signal in comparison with external noise. It will be understood from this result that no matter how high the reception power from the base station, the error rate will not fall below a certain value if the effects of SCH are present. Since a plurality of other codes contained in the receive signal are all orthogonal, they are not a cause of degradation. However, it will be understood that owing to the presence of the synchronization channel SCH, characteristics are degraded in a major way.

Though various inventions have been made in order to eliminate such interference, many involve the aforementioned problem of a greatly increased amount of processing, as described above in conjunction with Fig. 10.

Further, the first prior-art technique discloses using a cross-correlation value between a spreading code and a non-orthogonal code. However, when an undesired signal is produced, a problem is that an undesired signal (the replica signal) cannot be generated accurately because no use is made of (1) the channel estimation value of each path of multipath and (2) the power ratio between the undesired signal and the pilot signal.

The second prior-art technique discloses generating a non-orthogonal spreading signal that has undergone compensation for phase rotation. However, a problem is that an undesired signal (the replica signal) cannot be generated accurately because no use is made of (1) a cross-correlation value between a spreading code and a non-orthogonal code, (2) the channel estimation value of each path of multipath and (3) the power ratio between the undesired signal and the pilot signal.

WO 03/043239 A1 discloses a method for use in a code division multiple access communication system having network infrastructure and a plurality of mobile terminals, including transmitting a composite signal comprising a synchronization signal and another non-orthogonal signal from the network infrastructure, receiving the composite signal at the plurality of mobile terminals and increasing forward link capacity of the code division multiple access communication system by cancelling the synchronization signal from at least some of the plurality of mobile terminals.

US 6 034 986 discloses an apparatus and a method for receiving spread-spectrum signals. The method includes the steps of detecting a noisy user signal from a spread-spectrum signal including at least a first user signal (including data therein) and at least one pilot signal, and removing an interference effect of the pilot signal on the first user signal from the noisy user signal thereby to create a noise reduced user signal.

## SUMMARY OF THE INVENTION

Accordingly, an object of the present invention is to so arrange it that it is possible to generate, accurately and with a small amount of processing, a replica (a canceling signal) of an undesired signal component that will be spread by a non-orthogonal code.

Another object of the present invention is to so arrange it that a desired signal can be demodulated accurately and output.

According to a first aspect of the present invention there is provided a CDMA radio receiver for eliminating interference due to a Synchronization Channel SCH signal from a received signal and outputting a desired signal, comprising: a first RAKE receiving unit for despreading the received signal by a spreading code of a desired signal and performing RAKE combining to produce a RAKE-combination signal; a canceling-signal generator for generating a canceling signal that cancels the interference due to the SCH signal contained in the received signal; and a signal eliminating unit for subtracting the canceling signal from the RAKE-combination signal and outputting the desired signal, wherein said canceling-signal generator includes: a correlation output unit for outputting a correlation value between the spreading code used to spread the desired signal and a non-orthogonal code used to spread the SCH signal, the non-orthogonal code being non-orthogonal to the desired-signal spreading code; an amplitude-ratio acquisition unit for acquiring an amplitude ratio between a pilot signal and the SCH signal contained in the received signal; a second RAKE receiving unit for despreading the received signal by a spreading code used to spread the pilot signal to generate multipath channel estimation values, and for RAKE-combining the multipath channel estimation values and outputting a result of the RAKE-combining of the channel estimation values; and a canceling-signal output unit for outputting the canceling signal by multiplying the correlation value, amplitude ratio and result of RAKE-combination of the channel estimation values.

According to a second aspect of the present invention there is provided a method of eliminating interference due to a Synchronization Channel SCH signal from a received signal in a CDMA radio receiver and outputting a desired signal, comprising the steps of: despreading the received signal by a spreading code of a desired signal and performing RAKE combining to produce a RAKE-combination signal; generating a canceling signal that cancels the interference due to the SCH signal contained in the received signal; and subtracting the canceling signal from the RAKE-combination signal and outputting the desired signal, wherein said canceling-signal generating step includes: outputting a correlation value between the spreading code used to spread the desired signal and a non-orthogonal code used to spread the SCH signal, the non-orthogonal code being non-orthogonal to the desired-signal spreading code; acquiring an amplitude ratio between a pilot signal and the SCH signal contained in the received signal; despreading the received signal by a spreading code used to spread the pilot signal to generate multipath channel estimation values, RAKE-combining the multipath channel estimation values and outputting a result of the RAKE-combining of the channel estimation values; and outputting the canceling signal by multiplying the correlation value, amplitude ratio and result of RAKE-combination of the channel estimation values.

Thus, the present invention is so adapted as to output a correlation value between a spreading code for spreading a desired signal and a non-orthogonal code, which is a code that is not orthogonal to the spreading code, for spreading an SCH signal; acquire an amplitude ratio between a pilot signal and the SCH signal contained in the receive signal; RAKE-combine multipath channel estimation values; generate a signal, which cancels an undesired signal component, using the correlation value, amplitude ratio and result of RAKE-combination of the channel estimation values; and subtract the canceling signal from the receive signal and output the desired signal. It is therefore possible to generate, accurately and with a small amount of processing, a replica (a canceling signal) of the SCH signal component that will be spread by a non-orthogonal code. As a result, in accordance with the present invention, a desired signal can be demodulated accurately and output.

Other features and advantages of the present invention will be apparent from the following description taken in conjunction with the accompanying drawings.

## BRIEF DESCRIPTION OF THE DRAWINGS

Fig. 1 is a block diagram illustrating a non-orthogonal code interference eliminating apparatus in a CDMA radio receiver according to the present invention;
Fig. 2 is a block diagram illustrating a non-orthogonal code interference eliminating apparatus in a CDMA radio receiver;
Fig. 3 illustrates an embodiment of an amplitude ratio extraction unit;
Fig. 4 illustrates other examples of the structure of an amplitude ratio extraction unit;
Fig. 5 illustrates the result of a simulation in a case where an undesired signal has been cancelled by the present invention;

Fig. 6 is a diagram useful in describing the positional relationship among a synchronization channel SCH, common pilot channel CPICH and dedicated physical channel DPCH according to the prior art;

Fig. 7 illustrates an example of the structure of a transmitter in a hypothetical CDMA system according to the prior art;

Fig. 8 illustrates an example of the structure of a conventional CDMA receiver that does not possess an interference eliminating apparatus;

Fig. 9 illustrates an example of a waveform illustrating the reception level of a receive baseband signal according to the prior art;

Fig. 10 illustrates a CDMA receiver having an interference eliminating function according to the prior art; and

Fig. 11 illustrates the result of a simulation representing the effects of SCH interference in a W-CDMA system according to the prior art.

## DESCRIPTION OF THE PREFERRED EMBODIMENTS

(A) Overview of the present invention

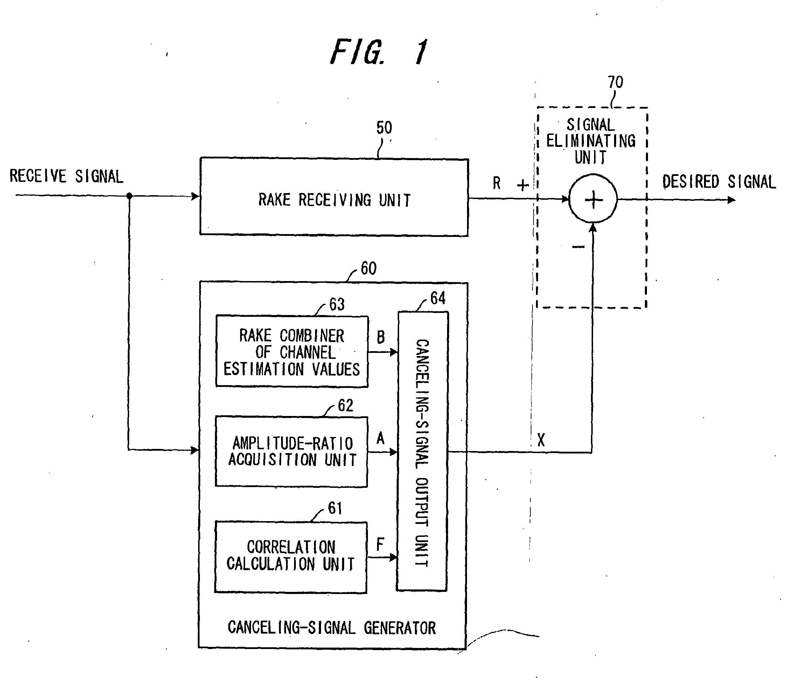

Fig. 1 is a block diagram illustrating a non-orthogonal code interference eliminating apparatus in a CDMA radio receiver according to an embodiment of the present invention.

The interference eliminating apparatus includes a RAKE receiving unit 50 for despreading and RAKE-combining a receive signal by a spreading code code1 of a desired signal; a canceling-signal generator 60 for generating an undesired signal component, which is contained in the received signal, as a canceling signal; and a signal eliminating unit 70 for subtracting the canceling signal (undesired signal component) from the RAKE-combined signal and outputting a desired signal.

The canceling-signal generator 60 includes a correlation calculation unit 61 for calculating a correlation value between the spreading code code1 that spreads the desired signal and a non-orthogonal code code2, which is a code that is not orthogonal to the spreading code, for spreading the undesired signal; an amplitude-ratio acquisition unit 62 for acquiring an amplitude ratio between a pilot signal and the undesired signal contained in the receive signal; a RAKE combiner 63 for RAKE-combining and outputting multipath channel estimation values; and a canceling-signal output unit 64 for multiplying the correlation value, amplitude ratio and result of RAKE-combination of the channel estimation values and outputting the canceling signal.

The RAKE receiving unit 50 despreads and RAKE-combines the receive signal by the spreading code code1 of the desired signal. The correlation calculation unit 61 in the canceling-signal generator 60 calculates correlation F between the spreading code code1 and non-orthogonal code code2, the amplitude-ratio acquisition unit 62 acquires an amplitude ratio A between the pilot signal and undesired signal contained in the receiving signal, the RAKE combiner 63 RAKE-combines the multipath channel estimation values, and the canceling-signal output unit 64 multiplies the correlation value F, amplitude ratio A and result B of RAKE-combination of the channel estimation values, thereby generating the canceling signal (undesired signal component) X. The signal eliminating unit 70 subtracts the canceling signal X from the RAKE-combined signal R that is output from the RAKE receiving unit 50, thereby outputting the desired signal.

(B) Principles of the present invention

Let code1 represent the spreading code that spreads the desired signal (signal D1), and let code2 represent a code, which is not orthogonal to the spreading code code1 for spreading the undesired signal (SCH channel D2). Let code0 represent a code, which is orthogonal to the spreading code code1 for spreading the pilot signal. In the description that follows, consideration will be directed toward a non-orthogonal code interference canceling unit that eliminates only interference that appears because the spreading code code2 of the undesired signal D2 is not orthogonal to the spreading code code1 of the desired signal D1; it will be assumed that interference ascribable to multipath delay is not eliminated. Further, let the following hold:

(1) let $DSS_k$ represent a symbol that is the result of despreading a kth path of a multipath system;
(2) let $N_{SF}$ represent a spreading factor SF of the desired signal D1;
(3) let $D1_k(i)$ represent an ith chip component on a kth path of a D1 spread signal obtained by spreading a receive wave by code1;
(4) let $D2_k(i)$ represent an ith chip component on a kth path of a D2 spread signal obtained by spreading a receive wave by code2;
(5) let $s_i$ [= code1 (i)] represent an ith chip component of spreading code code1 of desired signal D1; and
(6) let $n_k$ represent noise contained after despreading.

The symbol $DSS_k$ that is the result of despreading a kth path of a multipath system by code1 is given by the following equation:

$$DSS_k = \sum_{i=0}^{N_{SF}-1} s_i^* D1_k(i) + \sum_{i=0}^{N_{SF}-1} s_i^* D2_k(i) + n_k \qquad (1)$$

Accordingly, the symbol R after RAKE combination is expressed by the following, where $w_k$ represents a RAKE combining coefficient:

$$R = \sum_{k=0}^{Npath-1} w_k^* DSS_k(i)$$

$$= \sum_{k=0}^{Npath-1} w_k^* \sum_{i=0}^{N_{SF}-1} s_i^* D1_k(i) + \sum_{k=0}^{Npath-1} w_k^* \sum_{i=0}^{N_{SF}-1} s_i^* D2_k(i) + \sum_{k=0}^{Npath-1} w_k^* n_k \qquad (2)$$

$$= D_R + X + n_R$$

The RAKE combining coefficient $w_k$ is given by the following equation:

$$w_k = \frac{C_k}{\sigma_k^{\,2}} \qquad (3)$$

where $C_k$ represents a channel estimation value of a kth path in a multipath system, and $\sigma_k$ represents variance relating to a plurality of despread symbols of CPICH obtained by despreading at the receive timing of the kth path. As another example, the following equation in abbreviated form also is in wide general use:

$$w_k = C_k \qquad (4)$$

By letting DR, X and nR represent the first, second and third terms, respectively, on the right side of the second equation in Equation (2) above, the third equation is obtained. Accordingly, the undesired signal component, i.e., the canceling signal X, is expressed by the following equation:

$$X = \sum_{k=0}^{N_{path}-1} w_k^* \sum_{i=0}^{N_{SF}-1} s_i^* D2_k(i) \qquad (5)$$

The desired signal can be obtained by subtracting the canceling signal X from the RAKE symbol R.
If we let $R_{cancel}$ represent the RAKE symbol obtained by canceling the canceling signal X, then cancellation can be achieved by subtraction as in the following manner:

$$R_{cancel} = R - X \qquad (6)$$

It should be noted that the canceling signal X is not estimated in the canceling arrangement of the prior art shown in Fig. 10. In the prior art, the undesired signal D2 itself is demodulated, then the undesired signal D2 is spread to generate the replica signal of waveform $D2_k(i)$ contained in the receive signal. The replica signal is then subtracted from the receive signal r(t), which is expressed by the following equation:

$$r(t) = \sum_{k=1}^{Npath} \{D1_k(t) + D2_k(t)\} + n(t) \tag{7}$$

to thereby generate the spread signal of the desired signal. In other words, the interference component is eliminated from received baseband signal.

Method of estimating X

A characterizing feature of the present invention is that the canceling signal X can be estimated by a simplified arrangement. A method of estimating the canceling signal X will now be described.

If we let $C_k$ represent a channel estimation value on a kth path of the common pilot channel CPICH, let D2_Ec/D0_Ec represent the power ratio between the despread symbols of the undesired signal D2 and pilot signal D0, and let code2(i) represent an ith chip of spreading code code2 of the undesired signal D2 [where $|code2(i)|^2 = 1$ holds], then the ith chip $D2_k(i)$ on the kth path of undesired signal D2 can be written as follows:

$$D2_k(i) = C_k code2(i)\sqrt{\frac{D2\_Ec}{D0\_Ec}} \tag{8}$$

The reason for this is that if both sides of the above equation are multiplied by code2 (i)*, the following transformation can be performed:

$$D2_k(i)code2(i)^* = C_k\sqrt{\frac{D2\_Ec}{D0\_Ec}} \tag{9}$$

the left side is the undesired signal received via the kth path, and the undesired signal can be represented by the product of the channel characteristic $C_k$ of the kth path and the power ratio D2_Ec/D0_Ec.

If Equation (8) is substituted into Equation (5), the canceling signal X can be expressed as follows:

$$X = \sum_{k}^{N_{path}-1} w_k^* \sum_{i=0}^{N_{SF}-1} s_i^* C_k \times code2(i)\sqrt{\frac{D2\_Ec}{D0-Ec}}$$

$$= \sqrt{\frac{D2\_Ec}{D0-Ec}} \cdot \left(\sum_{k}^{Npath-1} w_k^* C_k\right) \cdot \left(\sum_{i=0}^{N_{SF}-1} s_i^* \times code2(i)\right) \tag{10}$$

The canceling signal X that cancels the undesired signal (e.g., the SCH signal) using Equation (10) can be calculated from the following three items:

(1) the power ratio D2_Ec/D0_Ec between the despread symbols of the undesired signal D2 and pilot signal D0;
(2) the result of RAKE-combination of the channel estimation values of each path of the multipath system; and
(3) the correlation between the spreading code code1(i) (= $s_i$) that spreads the desired signal D1 and the non-orthogonal code code2(i) that spreads the undesired signal (SCH signal) D2.

(C) Apparatus for eliminating non-orthogonal code interference

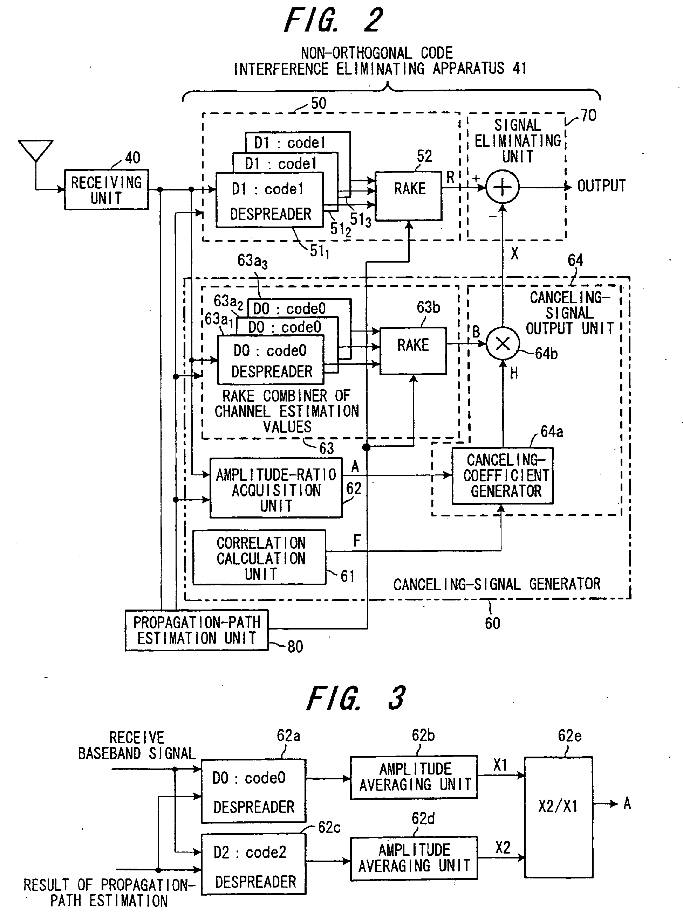

Fig. 2 is a block diagram illustrating a non-orthogonal code interference eliminating apparatus in a CDMA radio receiver. Here components identical with those of Fig. 1 are designated by like reference characters. Furthermore, a system that satisfies the following requirements (1) to (4) is assumed to be the CDMA system:

(1) multiple access is being performed by CDMA;

(2) the signal (desired signal) D1 to be demodulated has been spread by spreading code code1;

(3) the pilot signal D0 has been spread by the spreading code code0, which is orthogonal to the spreading code code1 of the desired signal; and

(4) the signal D2 not to be demodulated (namely the undesired signal), which signal is spread by the code code2 that is not orthogonal to the spreading code code1 of the desired signal, exists.

The transmitter of such a CDMA system is not shown but the arrangement illustrated in Fig. 7 can be used.

In the CDMA receiver of Fig. 2, a receiving unit 40 frequency-converts a radio signal, which has been received from the antenna, to a baseband signal, demodulates the signal by QPSK orthogonal modulation, converts the demodulated signal from an analog signal to digital data and inputs the result to a non-orthogonal code interference eliminating apparatus 41.

The non-orthogonal code interference eliminating apparatus 41 includes a RAKE receiving unit 50 for despreading and RAKE-combining the receive signal by the spreading code code1 of the desired signal; the canceling-signal generator 60 for generating an undesired signal component, which is contained in the received signal, as a canceling signal; the signal eliminating unit 70 for subtracting the canceling signal (the undesired signal component) from the RAKE-combined signal and outputting a desired signal; and a propagation-path estimation unit 80 for calculating the correlation between the spreading code code1 of the desired signal and the receive baseband signal to thereby estimate the number of paths of the multipath system and the receive timings, and for estimating (by channel estimation) the phases and amplitudes of delayed waves received at the timings of the respective paths.

The RAKE receiving unit 50 has fingers $51_1$, $51_2$, $51_3$, $\cdots$ conforming to the number of paths of the multipath system. The fingers perform despreading at path timings t1 t2, t3 (see Fig. 9 by way of example) by the code code1 that was used to spread the desired signal D1, after which the fingers delay the despread signals by prescribed time delays, thereby uniformalizing the timings, and input the resultant signals to a RAKE unit 52. The RAKE unit 52 applies weighting to the results of despreading by the fingers by using the channel characteristics of the paths (estimated values of phase and amplitude of the paths) estimated by the propagation-path estimation unit 80 and then combines the results. The RAKE unit 52 outputs the symbol R obtained by the RAKE combining operation and given by Equation (2).

In the cancelling-signal generator 60, a correlation calculation unit 61 calculates the correlation value F between the spreading code code1 that spreads the desired signal D1 and the non-orthogonal code code2, which is a code that is not orthogonal to the spreading code, for spreading the undesired signal D2. The correlation value F is the third element on the right side of Equation (10), namely the following:

$$F = \left( \sum_{i=0}^{N_{SF}-1} \overset{\bullet}{s_i} \times code2(i) \right) \qquad (11)$$

The amplitude-ratio acquisition unit 62 calculates the amplitude ratio A between the pilot signal D0 and the undesired signal D2 that are contained in the receive signal. Fig. 3 illustrates an embodiment of the amplitude-ratio acquisition unit 62. Specifically, a first despreader 62a despreads the receive baseband signal by the spreading code code0 of the pilot signal at the timing of the delayed wave of maximum reception power among the plurality of delayed waves constituting the receive baseband signal, thereby generating the pilot signal. An amplitude averaging unit 62b calculates average amplitude X1 of the despread pilot signal. A second despreader 62c despreads the receive baseband signal by the spreading code code2 of the undesired signal at the timing of the delayed wave of maximum reception power among the plurality of delayed waves constituting the receive baseband signal, thereby generating the undesired signal. An amplitude averaging unit 62d calculates average amplitude X2 of the despread undesired signal. A divider 62e calculates the amplitude ratio A by the following equation using the average amplitudes X1, X2:

$$A = X2/X1$$

The amplitude ratio A, which corresponds to the square root of the power ratio of Equation (10), is expressed by the following:

$$A = \sqrt{\frac{D2\_Ec}{D0\_Ec}} \qquad (12)$$

It should be noted that the amplitude ratio can be acquired not only by the above calculation. That is, it can be acquired using the amplitude ratio between the pilot signal and undesired signal received from the transmitting side, or the transmission power of the pilot signal and of the undesired signal, or the transmission amplitudes of the pilot signal and undesired signal.

The RAKE combiner 63 has fingers $63a_1$, $63a_2$, $63a_3$, $\cdots$ the number of which corresponds to the number of paths in the multipath system. The fingers perform despreading at the path timings t1, t2, t3 by the code code0 that was used to spread the pilot signal D0, after which the fingers delay the despread signals by prescribed time delays, thereby uniformalizing the timings, and input the resultant signals to a RAKE unit 63b. The RAKE unit 63b applies weighting to the results of despreading by the fingers by using the channel characteristic $C_k$ of each path estimated by the propagation-path estimation unit 80 and then combines the results. More specifically, the RAKE unit 63b RAKE-combines the channel estimation values $C_k$ of the multiple paths and outputs the second element on the right side of Equation (10), namely the following:

$$B = \left( \sum_{k}^{Npath-1} w_k \dot{C}_k \right) \qquad (13)$$

A canceling-coefficient generator 64a in the canceling-signal output unit 64 calculates a canceling coefficient H by the following equation:

$$\mathbf{H = A \times F} \qquad (14)$$

and a multiplier 64b multiplies the result B of RAKE combining of the channel estimation values Ck by the canceling coefficient H and outputs the canceling signal X. It should be noted that Equation (14) represents the simplest method of calculating the canceling coefficient H. Other methods can also be used to calculate the coefficient.

The signal eliminating unit 70 subtracts the canceling signal X from the output R (the result of despreading and RAKE-combining the receive signal by the spreading code code1) of the RAKE receiving unit 50 and outputs the desired signal.

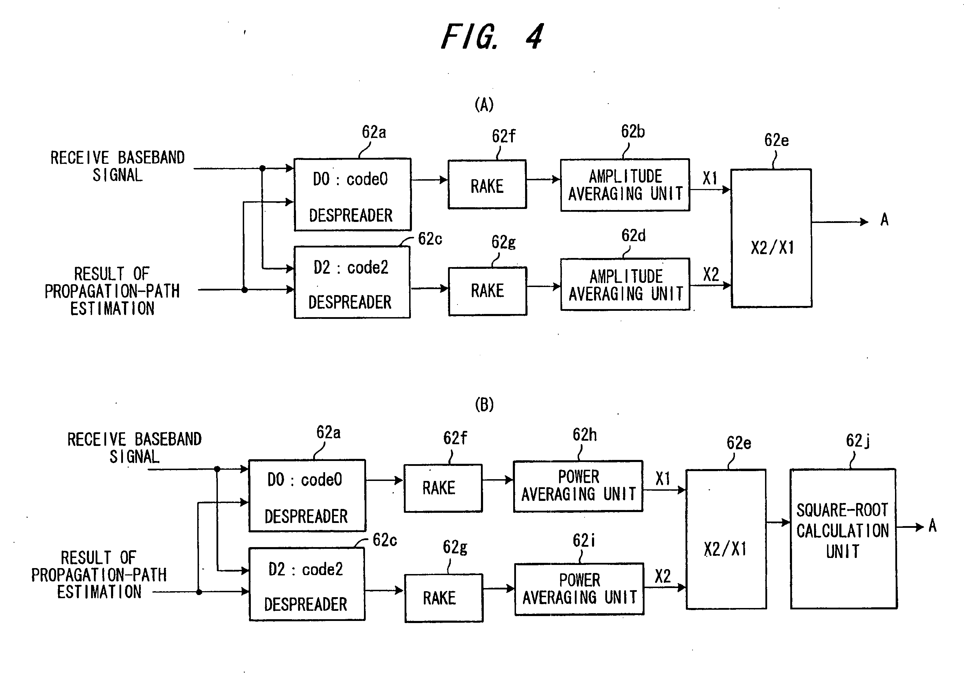

In Fig. 4, (A) and (B) illustrate other examples of the structure of the amplitude-ratio acquisition unit 62. Components identical with those in Fig. 3 are designated by like reference characters. In (A) of Fig. 4, the first despreader 62a despreads the receive baseband signal by multiplying it by the spreading code code0 of the pilot signal on a per-path basis in the multipath system, and a RAKE combiner 62f weights and combines the results of despreading of respective paths and outputs the combined signal. The amplitude averaging unit 62b calculates and outputs the average amplitude X1 of the results of RAKE combining. The second despreader 62c despreads the receive baseband signal by multiplying it by the spreading code code2 of the undesired signal on a per-path basis of the multipath system. A RAKE combiner 62g weights and combines the results of despreading of respective paths and outputs the combined signal. The amplitude averaging unit 62d calculates the average amplitude X2 of the result of RAKE combining. The divider 62e calculates the amplitude ratio A by the following equation using the average amplitudes X1, X2:

$$\mathbf{A = X2/X1}$$

By adopting this arrangement, it is possible to perform amplitude estimation of D0, D2 with excellent quality and to estimate the amplitude ratio A with good quality using a receive signal of a plurality of delayed waves.

In (B) of Fig. 4, the power ratio is found and the amplitude ratio A is calculated as the square root of the power ratio. Specifically, a power averaging unit 62h calculates and outputs the average power X1 of the result of RAKE combining, and a power averaging unit 62i calculates and outputs the average power X2 of the result of RAKE combining. A divider 26e calculates the power ratio X2/X1 using the average power values X1, X2, and a square-root calculation unit 62j calculates and outputs the amplitude ratio A using the following equation:

$$A = \sqrt{\frac{X2}{X1}}$$

In the present invention, processing that is additional processing in comparison with an arrangement that does not possess a canceling unit is (1) calculation of the correlation between code2 and code0, (2) calculation of the amplitude ratio, (3) multiplication between these two and (4) subtraction processing for cancellation. Thus the increase in amount of processing can be suppressed. Further, by using the non-orthogonal code canceling unit of the present invention, interference can be reduced and high-quality communication can be carried out.

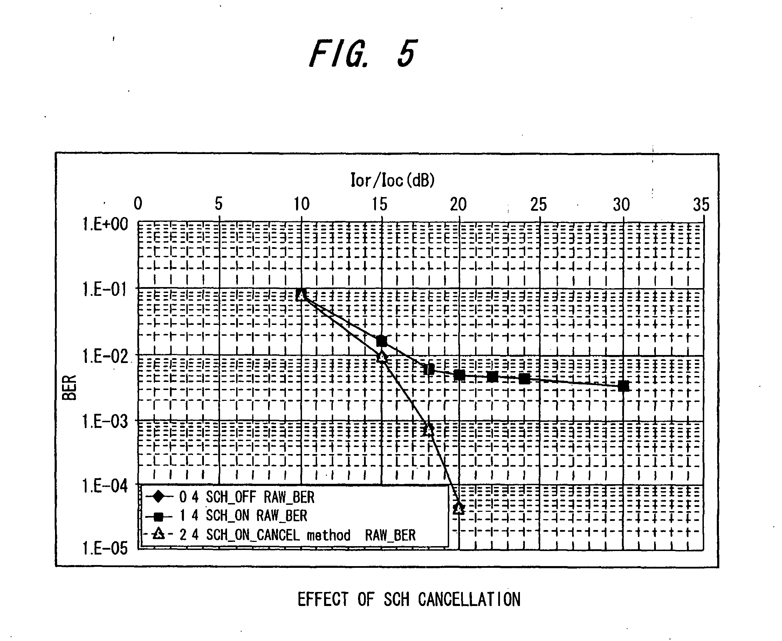

Fig. 5 illustrates the result of a simulation in a case where an undesired signal is cancelled by the present invention. With W-CDMA, a channel referred to as an HS-DSCH (High Speed - Downlink Shared Channel) exists in order to perform high-speed data transmission. Further, a channel referred to as a synchronization channel SCH used to establish synchronization between a base station and mobile station exists. What was evaluated in the simulation was receive-signal power vs. the error rate of the HS-DSCH in a case where the signal to be demodulated was assumed to be the HS-DSCH and interference by the synchronization channel SCH, which is not orthogonal to the HS-DSCH, was cancelled by the present invention. Here Ior represents the power of the component transmitted by the base station. This component is the object of communication and is contained in radio waves received by the antenna. Further, Ioc represents the reception power of components other than that of Ior contained in the receive signal. The horizontal axis of the graph is a plot of Ior/Ioc, which is the ratio of Ior to Ioc. The black squares in Fig. 5 indicate the error rate in a case where cancellation has not been carried out, and the white triangles indicate the error rate in a case where cancellation has been performed according to the present invention. It will be understood from the result of the simulation that if Ior/Ioc is large, degradation caused by interference from the synchronization channel SCH that employs the non-orthogonal code is the predominant cause of degradation. Further, it will be understood that in accordance with the interference eliminating function of the present invention, the effects of SCH interference are eliminated and a very low error rate is achieved.

It is to be understood that the present invention is not limited to the specific embodiments thereof disclosed herein, except as defined in the appended claims.

**Claims**

1. A CDMA radio receiver for eliminating interference due to a Synchronization Channel SCH signal from a received signal and outputting a desired signal, comprising:

   a first RAKE receiving unit (50) for despreading the received signal by a spreading code of a desired signal and performing RAKE combining to produce a RAKE-combination signal;
   a canceling-signal generator (60) for generating a canceling signal that cancels the interference due to the SCH signal contained in the received signal; and
   a signal eliminating unit (70) for subtracting the canceling signal from the RAKE-combination signal and outputting the desired signal,

   wherein said canceling-signal generator (60) includes:

   a correlation output unit (61) for outputting a correlation value between the spreading code used to spread the desired signal and a non-orthogonal code used to spread the SCH signal, the non-orthogonal code being non-orthogonal to the desired-signal spreading code;
   an amplitude-ratio acquisition unit (62) for acquiring an amplitude ratio between a pilot signal and the SCH signal contained in the received signal;
   a second RAKE receiving unit (63, 63a to $63a_3$, 63b) for despreading the received signal by a spreading code used to spread the pilot signal to generate multipath channel estimation values, and for RAKE-combining the multipath channel estimation values and outputting a result of the RAKE-combining of the channel estimation values; and
   a canceling-signal output unit (64, 64a, 64b) for outputting the canceling signal by multiplying the correlation value, amplitude ratio and result of RAKE-combination of the channel estimation values.

2. The CDMA radio receiver according to claim 1, wherein said amplitude-ratio acquisition unit (62) is operable to acquire the amplitude ratio by using the amplitude ratio between the pilot signal and the SCH signal received from the transmitting side, or by using the transmission power of the pilot signal and of the SCH signal, or by using the transmission amplitudes of the pilot signal and the SCH signal.

3. The CDMA radio receiver according to claim 1, wherein said amplitude-ratio acquisition unit (62) includes:

means (62a to 62d) for despreading and obtaining the pilot signal and the SCH signal contained in a delayed wave of maximum reception power among a plurality of delayed waves received; and
means (62e) for calculating the amplitude ratio based upon a result of despreading.

4. A CDMA radio receiver according to claim 1, wherein:

the correlation output unit (61) is operable to calculate the correlation value by the equation

$$\left( \sum_{i=0}^{N_{SF}-1} s_i^* \times code2(i) \right)$$

where $N_{SF}$ represents a spreading factor SF of the desired signal, where *code1* represents the spreading code of the desired signal, where $s_i$ represents an i$^{th}$ chip component of *code1,* where *code2* represents the non-orthogonal code of the SCH signal, and where *code2(i)* represents an i$^{th}$ chip component of *code2;*
the amplitude-ratio acquisition unit (62) is operable to calculate the amplitude ratio by the equation

$$\sqrt{\frac{D2\_Ec}{D0\_Ec}}$$

where *D2* represents the SCH signal, where *D0* represents the pilot signal, and where *D2_Ec / D0_Ec* represents the power ratio between despread symbols of the SCH signal and the pilot signal; and the second RAKE receiving unit (63, 63a$_1$ to 63a$_3$, 63b) is operable to calculate the result of the RAKE-combining by the equation

$$\left( \sum_{k}^{Npath-1} w_k^* C_k \right)$$

where *Npath* represents the number of multipath paths of the received signal, where $w_k$ represents a RAKE combining coefficient of a $k^{th}$ said path, and wherein $C_k$ represents a said channel estimation value of a $k^{th}$ said path.

5. A method of eliminating interference due to a Synchronization Channel SCH signal from a received signal in a CDMA radio receiver and outputting a desired signal, comprising the steps of:

despreading the received signal by a spreading code of a desired signal and performing RAKE combining to produce a RAKE-combination signal;
generating a canceling signal that cancels the interference due to the SCH signal contained in the received signal; and
subtracting the canceling signal from the RAKE-combination signal and outputting the desired signal,

wherein said canceling-signal generating step includes:

outputting a correlation value between the spreading code used to spread the desired signal and a non-orthogonal code used to spread the SCH signal, the non-orthogonal code being non-orthogonal to the desired-signal spreading code;
acquiring an amplitude ratio between a pilot signal and the SCH signal contained in the received signal;
despreading the received signal by a spreading code used to spread the pilot signal to generate multipath channel estimation values, RAKE-combining the multipath channel estimation values and outputting a result of the RAKE-combining of the channel estimation values; and
outputting the canceling signal by multiplying the correlation value, amplitude ratio and result of RAKE-combination of the channel estimation values.

**Patentansprüche**

1. CDMA-Funkempfänger zum Eliminieren der Interferenz auf Grund eines Synchronisationskanal-(Synchronization Channel: SCH)-Signals von einem empfangenen Signal und zum Ausgeben eines gewünschten Signals, der umfasst :

    eine erste RAKE-Empfangseinheit (50) zum Entspreizen des empfangenen Signals durch einen Spreizcode eines gewünschten Signals und zum Ausführen einer RAKF-Kombination, um ein RAKE-Kombinationssignal hervorzubringen ;
    einen Unterdrückungssignalgenerator (60) zum Erzeugen eines Unterdrückugssignals, das die Interferenz auf Grund des SCH-Signals unterdrückt, das in dem empfangenen Signal enthalten ist; und
    eine Signaleliminierungseinheit (70) zum Subtrahieren des Unterdrückungssignals von dem RAKE-Kombinationssignal und zum Ausgeben des gewünschten Signals,
    bei dem der Unterdrückungssignalgenerator (60) enthält:

    eine Korrelationsausgabeeinheit (61) zum Ausgeben eines Korrelationswertes zwischen dem Spreizcode, der verwendet wird, um das gewünschte Signal zu spreizen, und einem nichtorthogonalen Code, der verwendet wird, um das SCH-Signal zu spreizen, wobei der nichtorthogonale Code zu dem Spreizcode des gewünschten Signals nicht orthogonal ist;
    eine Amplitudenverhältniserfassungseinheit (62) zum Erfassen eines Amplitudenverhaltnisses zwischen einem Pilotsignal und dem SCH-Signal, das in dem empfangenen Signal enthalten ist;
    eine zweite RAKE-Empfangseinheit (63, 63a$_1$ bis 63a$_3$, 63b) zum Entspreizen des empfangenen Signals durch einen Spreizcode, der verwendet wird, um das Pilotsignal zu spreizen, um Mehrwegekanalschätzwerte zu erzeugen, und zur RAKE-Kombination der Mehrwegekanalschätzwertc und zum Ausgeben eines Resultats der RAKE-Kombination der Kanalschätzwerte; und
    eine Unterdrückungssignalsusgabeeinheit (64, 64a, 64b) zum Ausgeben des Unterdrückungssignals durch Multiplizieren des Korrelationswertes, des Amplitudenverhältnisses und des Resultats der RAKE-Kombination der Kanalschätzwerte.

2. CDMA-Funkempfänger nach Anspruch 1, bei dem die Amplitudenverhältniserfassungseinheit (62) betriebsfähig ist, um das Amplitudenverhältnis unter Verwendung des Amplitudenverhältnisses zwischen dem Pilotsignal und dem SCH-Signal, das von der Sendeseite empfangen wird, oder unter Verwendung der Sendeleistung des Pilotsignals und des SCH-Signals oder unter Verwendung der Sendeamplituden des Pilotsignals und des SCH-Signals zu erfassen.

3. CDMA-Funkempfänger nach Anspruch 1, bei dem die Amplitudenverhältniserfassungseinheit (62) enthält:

    Mittel (62a bis 62d) zum Entsprcizen und Erhalten des Pilotsignals und des SCH-Signals, das in einer verzögerten Welle mit maximaler Empfangsleistung unter einer Vielzahl von empfangenen verzögerten Wellen enthalten ist; und
    ein Mittel (62e) zum Berechnen des Amplitudenverhältnisses auf der Basis eines Resultats des Entspreizens.

4. CDMA-Funkempfänger nach Anspruch 1, bei dem:

    die Korrelationsausgabeeinheit (61) betriebsfähig ist, um den Korrelationswert durch die Gleichung

$$\left( \sum_{i=0}^{N_{SF}-1} s_i^* \times code2(i) \right)$$

    zu berechnen, wobei $N_{SF}$ einen Spreizfaktor SF des gewünschten Signals darstellt, code1 den Spreizcode des gewünschten Signals darstellt, $s_1$ eine i-te Chipkomponente von code1 darstellt, code2 den nichtorthogonalen Code des SCH-Signals darstellt und code2(i) eine i-te Chipkomponente von code2 darstellt;
    die Amplitudenverhältniscrfassungseinheit (62) betriebsfähig ist, um das Amplitudenverhältnis durch die Gleichung

$$\sqrt{\frac{D2\_Ec}{D0\_Ec}}$$

zu berechnen, wobei D2 das SCH-Signal darstellt, D0 das Pilotsignal darstellt und D2_Ec / D0_Ec das Leistungsverhältnis zwischen entspreizten Symbolen des SCH-Signala und des Pilotsignals darstellt; und

die zweite RAKE-Empfangseinheit (63, $63a_1$ bis $63a_3$, 63b) betriebsfähig ist, um das Resultat der RAKE-Kombination durch die Gleichung

$$\left( \sum_{k}^{Npath\ 1} w_k \cdot C_k \right)$$

zu berechnen, wobei Npath die Anzahl von Mehrwegepfaden des empfangenen Signals darstellt, $w_k$ einen RAKE-Kombinationskoeffizienten eines k-ten der genannten Pfade darstellt und $C_k$ einen genannten Kanalschätzwert des genannten k-ten Pfades darstellt.

5. Verfahren zum Eliminieren der Interferenz auf Grund eines Synchronisationskanal-(Synchronization Channel: SCH)-Signals von einem empfangenen Signal in einem CDMA-Empfänger und zum Ausgeben eines gewünschten Signals, mit den Schritten:

Entspreizen des empfangenen Signals durch einen Spreizcode eines gewünschten Signals und Ausführen einer RAKE-Kombination, um ein RAKE-Kombinationssignal hervorzubringen;
Erzeugen eines Unterdrückungssignals, das die Interferenz auf Grund des SCH-Signals unterdrückt, das in dem empfangenen Signal enthalten ist; und
Subtrahieren des Unterdrückungssignals von dem RAKE-Kombinationssignal und Ausgeben des gewünschten Signals,

bei dem der Unterdrückungssignalerzeugungsschritt enthält:

Ausgeben eines Korrelationswertes zwischen dem Spreizcode, der verwendet wird, um das gewünschte Signal zu spreizen, und einem nichtorthogonalen Code, der verwendet wird, um das SCH-Signal zu spreizen, welcher nichtorthogonale Code zu dem Spreizcodc des gewünschten Signals nicht orthogonal ist;
Erfassen eines Amplitudenverhältnisses zwischen einem Pilotsignal und dem SCH-Signal, das in dem empfangenen Signal enthalten ist;
Entspreizen des empfangenen Signals durch einen Spreizcode, der verwendet wird, um das Pilotsignal zu spreizen, um Mehrwegekanalschätzwerte zu erzeugen, Ausführen einer RAKE-Kombination der Mehrwegekanalschätzwerte und Ausgeben eines Resultats der RAKE-Kombination der Kanalschätzwerte; und
Ausgeben des Unterdrückungssignals durch Multiplizieren des Korrelationswertes, des Amplitudenverhältnisses und des Resultats der RAKE-Kombination der Kanalschätzwerte.

## Revendications

1. Récepteur radio du type à accès AMDC destiné à éliminer une interférence due à un signal de canal de synchronisation SCH d'un signal reçu et à fournir en sortie un signal souhaité, comprenant :

une première unité de réception de type RAKE (50) destinée à regrouper le signal reçu par le biais d'un code d'étalement d'un signal souhaité et à exécuter une combinaison de type RAKE pour produire un signal de combinaison de type RAKE,
un générateur de signal d'annulation (60) destiné à générer un signal d'annulation qui annule l'interférence due au signal de canal SCH contenue dans le signal reçu, et
une unité d'élimination de signal (70) destinée à soustraire le signal d'annulation du signal de combinaison de type RAKE et à fournir en sortie le signal souhaité,

dans lequel ledit générateur de signal d'annulation (60) comprend :

une unité de sortie de corrélation (61) destinée à fournir en sortie une valeur de corrélation entre le code d'étalement utilisé pour étaler le signal souhaité et un code non orthogonal utilisé pour étaler le signal de canal SCH, le code non orthogonal étant non orthogonal au code d'étalement de signal souhaité,
une unité d'acquisition de rapport d'amplitude (62) destinée à acquérir un rapport d'amplitude entre un signal pilote et le signal de canal SCH contenu dans le signal reçu,
une deuxième unité de réception de type RAKE (63, 63a$_1$ à 63a$_3$, 63b) destinée à regrouper le signal reçu par le biais d'un code d'étalement utilisé pour étaler le signal pilote afin de générer des valeurs d'estimations de canaux multivoies, et destinée à combiner selon le type RAKE les valeurs d'estimations de canaux multivoies et à fournir en sortie un résultat de la combinaison de type RAKE des valeurs d'estimations de canaux, et
une unité de sortie de signal d'annulation (64, 64a, 64b) destinée à fournir en sortie le signal d'annulation en multipliant la valeur de corrélation, le rapport d'amplitude et le résultat de la combinaison de type RAKE des valeurs d'estimations de canaux.

2. Récepteur radio du type à accès AMDC selon la revendication 1, dans lequel ladite unité d'acquisition de rapport d'amplitude (62) peut être mise en oeuvre pour acquérir le rapport d'amplitude en utilisant le rapport d'amplitude entre le signal pilote et le signal de canal SCH reçu du côté émetteur, ou en utilisant la puissance d'émission du signal pilote et du signal de canal SCH, ou en utilisant des amplitudes d'émission du signal pilote et du signal de canal SCH.

3. Récepteur radio du type à accès AMDC selon la revendication 1, dans lequel ladite unité d'acquisition de rapport d'amplitude (62) comprend :

un moyen (62a à 62d) destiné à regrouper et à obtenir le signal pilote et signal de canal SCH contenus dans une onde retardée de puissance de réception maximale parmi une pluralité d'ondes retardées reçues, et
un moyen (62e) destiné à calculer le rapport d'amplitude sur la base d'un résultat de regroupement.

4. Récepteur radio du type à accès AMDC selon la revendication 1, dans lequel :

l'unité de sortie de corrélation (61) peut être mise en oeuvre pour calculer la valeur de corrélation par le biais de l'équation

$$\left( \sum_{i=0}^{N_{SF}-1} s_i{}^* \times code2(i) \right)$$

où $N_{SF}$ représente un facteur d'étalement SF du signal souhaité, où **code1** représente le code d'étalement du signal souhaité, où $s_i$ représente une $i^{ème}$ composante élémentaire de **code1,** où **code2** représente le code non orthogonal du signal de canal SCH et où **code2(i)** représente une $i^{ème}$ composante élémentaire de **code2,** l'unité d'acquisition de rapport d'amplitude (62) peut être mise en oeuvre pour calculer le rapport d'amplitude par le biais de l'équation

$$\sqrt{\frac{D2\_Ec}{D0\_Ec}}$$

où D2 représente le signal de canal SCH, où D0 représente le signal pilote, et où D2_Ec/D0_Ec représente le rapport de puissance entre les symboles regroupés du signal de canal SCH et du signal pilote, et la deuxième unité de réception de type RAKE (63, 63a$_1$ à 63a$_3$, 63b) peut être mise en oeuvre pour calculer le résultat de la combinaison de type RAKE par le biais de l'équation

$$\left( \sum_{k}^{Nvoies-1} w_k {}^* C_k \right)$$

où Nvoies représente le nombre de voies multivoies du signal reçu, où $w_k$ représente un coefficient de combinaison de type RAKE d'une dite $k^{ème}$ voie, et où $C_k$ représente une dite valeur d'estimation de canal d'une dite $k^{ème}$ voie.

5. Procédé consistant à éliminer une interférence due à un signal de canal de synchronisation SCH d'un signal reçu dans un récepteur radio du type à accès AMDC et à fournir en sortie un signal souhaité comprenant les étapes consistant à :

regrouper le signal reçu par le biais d'un code d'étalement d'un signal souhaité et exécuter une combinaison de type RAKE pour produire un signal de combinaison de type RAKE,
générer un signal d'annulation qui annule l'interférence due au signal de canal SCH contenue dans le signal reçu, et
soustraire le signal d'annulation du signal de combinaison de type RAKE et fournir en sortie le signal souhaité,

dans lequel ladite étape de génération de signal d'annulation comprend :

la fourniture en sortie d'une valeur de corrélation entre le code d'étalement utilisé pour étaler le signal souhaité et un code non orthogonal utilisé pour étaler le signal de canal SCH, le code non orthogonal étant non orthogonal au code d'étalement de signal souhaité,
l'acquisition d'un rapport d'amplitude entre un signal pilote et le signal de canal SCH contenu dans le signal reçu,
le regroupement du signal reçu par le biais d'un code d'étalement utilisé pour étaler le signal pilote afin de générer des valeurs d'estimations de canaux multivoies, la combinaison de type RAKE des valeurs d'estimations de canaux multivoies et la fourniture en sortie d'un résultat de la combinaison de type RAKE des valeurs d'estimations de canaux, et
la fourniture en sortie du signal d'annulation en multipliant la valeur de corrélation, le rapport d'amplitude et le résultat de la combinaison de type RAKE des valeurs d'estimations de canaux.

## FIG. 1

RECEIVE SIGNAL

RAKE RECEIVING UNIT — 50

R +

SIGNAL ELIMINATING UNIT — 70

−

DESIRED SIGNAL

CANCELING-SIGNAL GENERATOR — 60

RAKE COMBINER OF CHANNEL ESTIMATION VALUES — 63

B

AMPLITUDE-RATIO ACQUISITION UNIT — 62

A

CORRELATION CALCULATION UNIT — 61

F

CANCELING-SIGNAL OUTPUT UNIT — 64

X

EP 1 605 601 B1

# FIG. 2

NON-ORTHOGONAL CODE
INTERFERENCE ELIMINATING APPARATUS 41

# FIG. 3

# FIG. 4

## (A)

RECEIVE BASEBAND SIGNAL → [62a: D0 : code0 DESPREADER] → [62f: RAKE] → [62b: AMPLITUDE AVERAGING UNIT] —X1→ [62e: X2/X1] → A

RESULT OF PROPAGATION-PATH ESTIMATION → [62c: D2 : code2 DESPREADER] → [62g: RAKE] → [62d: AMPLITUDE AVERAGING UNIT] —X2→ [62e: X2/X1]

## (B)

RECEIVE BASEBAND SIGNAL → [62a: D0 : code0 DESPREADER] → [62f: RAKE] → [62h: POWER AVERAGING UNIT] —X1→ [62e: X2/X1] → [62j: SQUARE-ROOT CALCULATION UNIT] → A

RESULT OF PROPAGATION-PATH ESTIMATION → [62c: D2 : code2 DESPREADER] → [62g: RAKE] → [62i: POWER AVERAGING UNIT] —X2→ [62e: X2/X1]

EP 1 605 601 B1

# FIG. 5

EFFECT OF SCH CANCELLATION

EP 1 605 601 B1

## FIG. 6

# FIG. 7

SIGNAL D0 (PILOT SIGNAL) → SPREAD BY code0 (10a) → B0 → ⊗ (10b) ← G0

SIGNAL D1 (SIGNAL TO BE DEMODULATED) → SPREAD BY code1 (11a) → B1 → ⊗ (11b) ← G1

SIGNAL D2 (SIGNAL OTHER THAN SIGNAL TO BE DEMODULATED) → SPREAD BY code2 (12a) → B2 → ⊗ (12b) ← G2

⊕ (13) → E → TRANSMITTING UNIT (14) → 15

# FIG. 8

21 → RECEIVING UNIT (22) → PROPAGATION-PATH ESTIMATION UNIT (23)

$t_1$ $t_2$ $t_3$

D1 : code1 DESPREADER ($24_1$, $24_2$, $24_3$) → RAKE (25) → OUTPUT

# FIG. 9

RECEPTION LEVEL

PATHS ASSIGNED TO FINGERS

MP1

MP2    MP3    THRESHOLD VALUE

TIME

t1  t2        t3

# FIG. 10

REPLICA SIGNAL

OUTPUT

*FIG. 11*

INFLUENCE OF SCH

EP 1 605 601 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001217813 A
- JP 2001156749 A
- WO 03043239 A1
- US 6034986 A